Europäisches Patentamt

European Patent Office

Office européen des brevets

(11) Publication number: **0 299 688**
**A1**

## EUROPEAN PATENT APPLICATION

(21) Application number: 88306240.8

(22) Date of filing: 08.07.88

(51) Int. Cl.⁴: **F28F 9/00**

(30) Priority: **14.07.87 GB 8716522**

(43) Date of publication of application:
**18.01.89 Bulletin 89/03**

(84) Designated Contracting States:
**BE DE FR GB IT**

(71) Applicant: **HICK HARGREAVES & COMPANY LIMITED**

**Bolton Lancashire, BL3 6DB(GB)**

(72) Inventor: **Walker, Frank**
**c/o Hick Hargreaves & Company Limited**
**Bolton, Lancashire BL3 6DB(GB)**

(74) Representative: **Massey, Alexander et al**
**MARKS & CLERK Suite 301 Sunlight House**
**Quay Street**
**Manchester, M3 3JY(GB)**

(54) **A securing tie for use with a tube bundle.**

(57) A securing tie for use in securing a block (8) to a tube (3) bundle of a heat exchanger for example comprises a pliant yet resilient stem (1) at each end of which is a resilient member (2) defining outwardly flaring, preferably radiussed, opposed surfaces (4). The stem (1) is capable of flexing so that in use it can adopt a curved profile around the block (8) to be secured to the tube (3) bundle and the surfaces (4) of each member (2) can locate at least partially against the adjacent surfaces of the same pair of tubes (3) respectively in a tube (3) bundle to clamp the tie in position around the block (8). The radiussed surfaces (4) may extend uniformly or in an offset manner but in either case oppositely with respect to the longitudinal axis of the stem (1).

FIG.3

EP 0 299 688 A1

## A SECURING TIE FOR USE WITH A TUBE BUNDLE

The present invention relates to a securing tie for use with a tube bundle such as is found in heat exchangers, condensers and like apparatus.

At present, the individual tubes in tube bundles in such apparatus are supported at their ends by perforated plates located at the ends of the bundle, the tubes being threaded through the perforations in the plates. As described in our U.K. Patent Specification No. 1 188 564, intermediate their ends, the tubes are usually retained in position by means of lengths of flexible resilient tubing which are threaded between the tubes and attached to clamping blocks located at spaced intervals along the length of a tube bundle. These clamping blocks are tied to the tube bundle by means of resilient bands or O-rings which are each stretched around a block and looped around one of the tubes of the bundle on each side of the block.

However, if one of the blocks has to be removed from the tube bundle, for example to carry out routine maintenance, the arrangement of the O-ring holding the block in position may make removal of the block difficult without cutting of the ring itself. Equally, the reattachment of the block to the tube bundle, involving looping of the O-ring over the end of a block, is time-consuming and sometimes hard to accomplish.

The object of the present invention is to provide a supporting tie which replaces the bands or O-rings previously employed and which is easier to locate in and remove from its position in a tube bundle when necessary.

According to a first aspect of the present invention there is provided a securing tie for use in securing a block to a tube bundle comprising a pliant yet resilient stem at each end of which is a resilient member defining outwardly flaring opposed surfaces, the stem being capable of flexing so that in use it can adopt a curved profile around a block to be secured to the tube bundle and the surfaces of each member can locate at least partially against the adjacent surfaces of the same pair of tubes respectively in a tube bundle to clamp the tie in position around the block.

According to a second aspect of the present invention there is provided a heat exchanger, condenser or other apparatus comprising a tube bundle with a block secured thereto by a tie according to the first aspect of the invention.

The present invention will now be described by way of example, with reference to the accompanying drawings, in which:

Figs. 1 and 2 each show front and side views of two embodiments of securing tie respectively; and

Fig. 3 shows a securing tie as shown in Fig. 1 in use in securing a tube bundle.

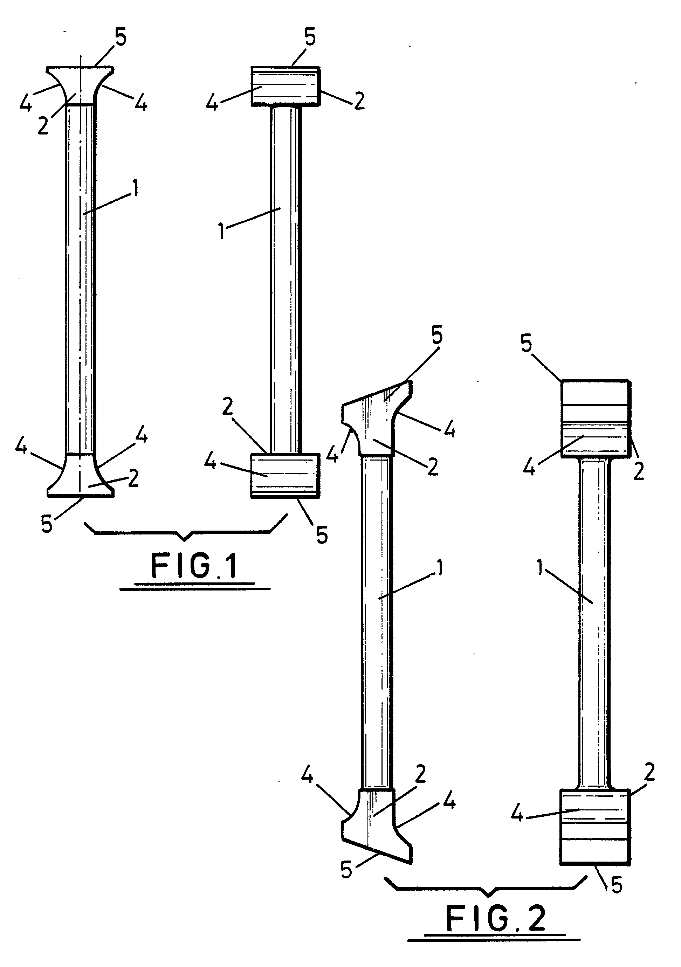

With reference to Figs. 1 and 2, a securing tie according to the present invention comprises a stem 1 at each end of which is an end member 2 for location between a pair of parallel tubes. The tie is of one-piece construction moulded from a pliant yet resilient material such as rubber, plastics or other synthetic material. Preferably, the tie is made from silicone rubber with a 75 to 80 Shore hardness factor.

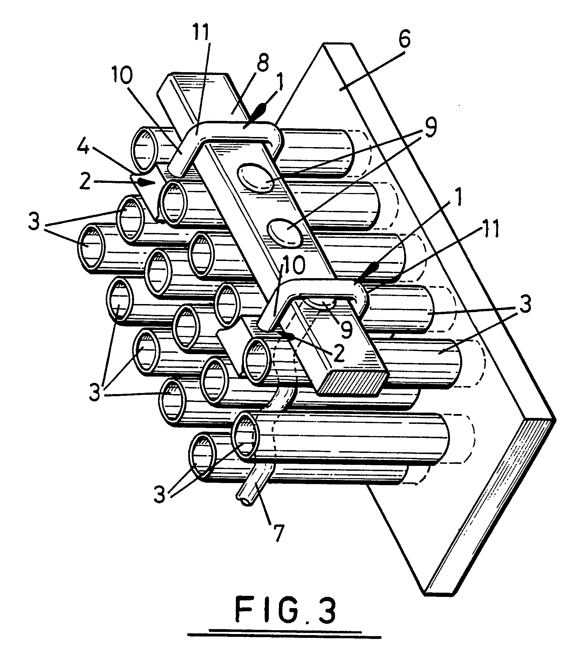

The end members 2 are profiled so that in use when located between a pair of parallel tubes 3, as shown in Fig. 3, the members 2 space the tubes 3 apart but are clamped therebetween. To this end, the members 2 are provided with two opposed radiussed surfaces 4, which flare outwardly from the stem 1. As shown in Fig. 1, the surfaces 4 are both curved with the same radius and are intended to be located between tubes 3 of identical radius so that the surfaces 4 are a close fit partially around the tubes 3. Fig. 2, however, shows surfaces 4 which although of the same radius are offset with respect to the longitudinal axis of the tie. This is to permit the tie to be used between tubes which are offset within a tube bundle.

It will be appreciated that the ends 5 of the members 2, as a consequent of the flaring surfaces 4, are wider than the stem 1. As a result, the members 2 are clamped between the tubes 3, when the tie is in use, as will now be described.

With reference to Fig. 3, tubes 3 forming a tube bundle in apparatus such as heat exchangers, condensers and the like, are supported at their ends by perforated plates 6, through the perforations of which the tubes 3 are located. Intermediate the ends of a tube bundle, in order to retain the tubes 3 substantially parallel to one another a series of lengths of flexible resilient tubing 7 are threaded between the tubes 3. The lengths of tubing 7 are threaded between the tubes 3 in a series of planes perpendicular to the longitudinal axes of the tubes 3. For any given planes series of lengths of tubing 7, the ends of the tubing 7 are passed through holes of appropriate diameter formed in a clamping block 8. After passing through the block 8, one end of each length of tubing 7 is terminated in a removable cap 9, of greater diameter than the diameter of the hole in the block 8 and which is push-fitted into the end of the tubing 7.

Thus, along the length of a tube bundle as shown in Fig. 3, is a series of blocks 8 located at right angles to the longitudinal axes of the tubes 3 to which the lengths of tubing 7 are attached. These blocks 8 are additionally attached to the tube bundle by means of securing ties 10 according to the invention. Each of the ties 10 is located in position by engaging one of its end members 2 between two of the tubes 3 in the bundle by pushing the member 2 between the tubes 3 by means of a pronged tool which engages the member 2 on each side of the stem 1. The resilience of the member 2 allowing it to be forced between the tubes 3 and then returning the member 2 to its original shape so that the radiussed surfaces 4 abut the adjacent surfaces of the tubes 3 respectively. The stem 1 of the tie 10 is then stretched around the block 8 and the other end member 2 slotted between the same two tubes 3 but on the opposite side of the block 8 in the same way. The end members 2 are therefore clamped between the tubes 3 with their surfaces 4 abutting and conforming to the outer surface of the tubes 3. The stem 1 of the tie 10, however, because of its resilience is forced to adopt a curved profile around the block 8 and is bent over at right angles as at 11 just inwardly of where the members 2 join it. As a result of the stretching of the stem 1, and the resilience of the end members 2, the members 2 are clamped between the tubes 3 and thereby secure the block 8 to the tube bundle. Typically, a plurality of ties 10 are employed to secure each block 8.

Although the securing tie is described above as being of a one-piece moulded construction, it will be appreciated that it can be made in parts, the end members 2 being made separately from the stem 1. It will also be appreciated that because of the resilience of the stem 1 that on removal of a tie from a tube bundle, the stem 1 will straighten and the tie adopt a position similar to those shown in Figs. 1 and 2.

## Claims

1. A securing tie for use in securing a block to a tube bundle comprising a pliant yet resilient stem at each of which is a resilient member defining outwardly flaring opposed surfaces, the stem being capable of flexing so that in use it can adopt a curved profile around a block to be secured to the tube bundle and the surfaces of each member can locate at least partially against the adjacent surfaces of the same pair of tubes respectively in a tube bundle to clamp the tie in position around the block.

2. A securing tie as claimed in claim 1, in which the stem and resilient members are unitary and are formed by a one-piece moulding of rubber or plastics.

3. A securing tie as claimed in claim 1, in which the stem and resilient members are seperable and are formed of rubber or plastics.

4. A securing tie as claimed in any one of claims 1 to 3 formed or silicone rubber with a 75 to 80 Shore hardness factor.

5. A securing tie as claimed in any one of claims 1 to 4 in which each resilient member has two opposed radiussed surfaces.

6. A securing tie as claimed in claim 5 in which the radiussed surfaces extend uniformly and oppositely with respect to the longitudinal axis of the stem.

7. A securing tie as claimed in claim 5 in which the radiussed surfaces are offset and extend oppositely with respect to the longitudinal axis of the stem.

8. A heat exchanger, condenser or other apparatus comprising a tube bundle with a block secured thereto by a tie according to any one of claims 1 to 7.

FIG.1

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-1 208 958 (JOZON)<br>* Claim 1; figure 1 * | 1,8 | F 28 F 9/00 |
| A | GB-A-1 307 368 (BOWTHORPE-HELLERMAN)<br>* Claim 1; figure 12 * | 1,8 | |
| A | FR-A- 685 769 (PIERRE et al.)<br>* Claim; figure 4 * | 1,8 | |
| A | US-A-3 544 049 (BROWN et al.)<br>* Abstract; figure 4 * | 1,8 | |
| A | EP-A-0 077 268 (CREUSOT-LOIRE)<br>* Figure 2 * | 1,8 | |
| D,A | GB-A-1 188 564 (H. HARGRAVES & CO.) | | |
| A | GB-A-2 174 172 (TECHNOS) | | |

| | TECHNICAL FIELDS SEARCHED (Int. Cl.4) |
|---|---|
| | F 28 F<br>F 16 L |

The present search report has been drawn up for all claims

| Place of search | Date of completion of the search | Examiner |
|---|---|---|
| THE HAGUE | 03-10-1988 | HOERNELL, L.H. |

EPO FORM 1503 03.82 (P0401)